# EUROPEAN PATENT SPECIFICATION

(11) **EP 0 590 974 B1**
(45) Date of publication and mention of the grant of the patent: **17.11.1999**
(21) Application number: 93307750.5
(22) Date of filing: 30.09.1993
(51) Int. Cl.: G11B 27/031, H04N 7/58

(54) **Coded video data editing apparatus and edited coded video data decoding apparatus**
Editiergerät für kodierte Videodaten und Dekodiergerät für editierte kodierte Videodaten
Appareil de montage de données de vidéo et appareil de décodage de données de vidéo codées montées

(30) Priority: 30.09.1992 JP 26251892; 12.02.1993 JP 2456393
(43) Date of publication of application: 06.04.1994
(73) Proprietor: KABUSHIKI KAISHA TOSHIBA, Kawasaki-shi, Kanagawa-ken 210-8572 (JP)
(72) Inventor: Shimoda, Kenji, c/o Int. Property Division, Minato-ku, Tokyo (JP)
(74) Representative: Muir, Ian R.

(56) References cited:
- EP-A- 0 124 043
- EP-A- 0 456 433
- US-A- 5 040 067

## Description

The present invention relates to a coded signal editing apparatus and edited coded signal decoding apparatus.

A coded signal editing apparatus and edited coded signal decoding apparatus, particularly an editing apparatus for video editing, has been marketed and is available in the market. This coded data editing apparatus is capable of creating a new image by rearranging a current image for every specified frame and is also capable of creating a new image by properly connecting specified frames of a plurality of video signals.

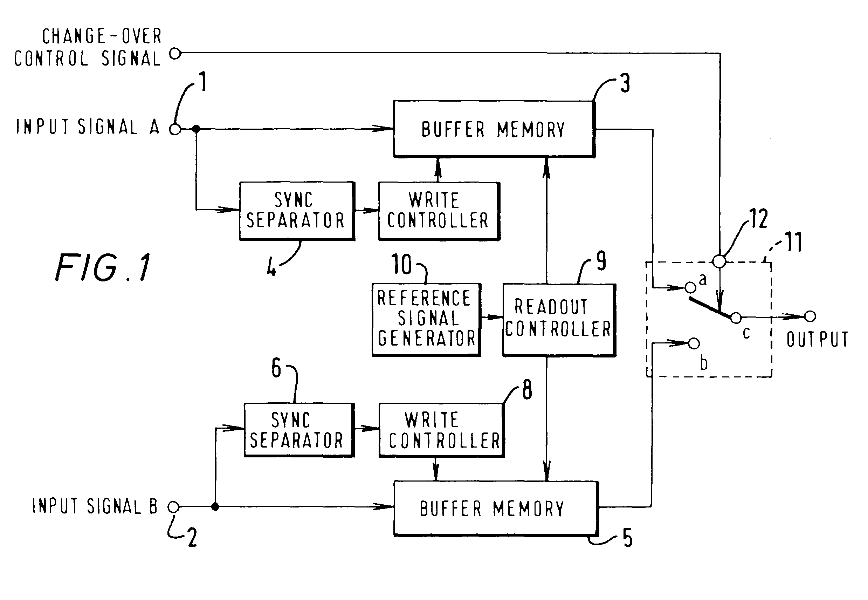

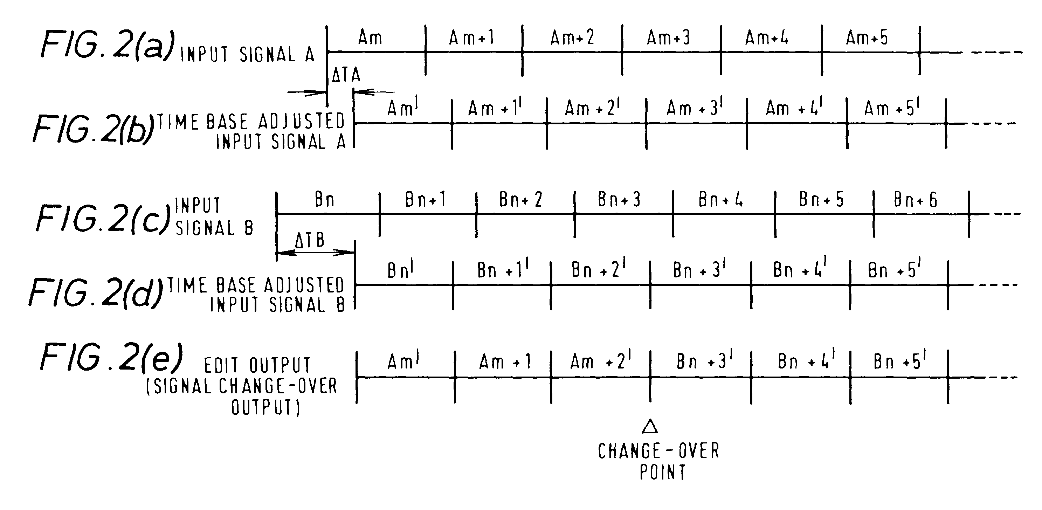

FIGURE 1 is a block diagram showing a coded data editing apparatus for editing such baseband video signals. FIGURES 2(a) through 2(e) are timing charts for explaining the operation of this coded data editing apparatus. FIGURE 2(a) shows an input image signal A. FIGURE 2(b) shows a time base adjusted form of the input image signal. FIGURE 2(c) shows an input image signal B. FIGURE 2(d) shows a time base adjusted form of the input image signal B. And FIGURE 2(e) shows an edit output (signal change-over output) from the coded data editing apparatus.

The input image signal A, as shown in FIGURE 2(a), is applied to an input terminal 1 in units of frames, i.e., frames Am, Am+1, Am+2, ... successively. Further, the input image signal B, as shown in FIGURE 2(c), is applied to an input terminal 2 in units of frames, i.e., frames; Bn, Bn+1, Bn+2, ... successively. The input image signal A is applied to a buffer memory 3 and a sync separator 4 while the input image signal B is applied to a buffer memory 5 and a sync separator 6. The sync separators 4 and 6 separate sync signals from the input image signals A and B and apply the sync signals to write controllers 7 and 8, respectively. The write controllers 7 and 8 control the writing operations to the buffer memories 3 and 5 using the sync signals of the input image signals A and B for storing the input image signals A and B in the buffer memories 3 and 5, respectively.

A readout operation of data from the buffer memories 3 and 5 is controlled by a readout controller 9. This readout controller 9 controls the readout operation of data stored in the buffer memories 3 and 5 based on a reference signal given from a reference signal generator 10. As a result, the input image signal A is read out after being delayed by ΔTA and the input image signal B is read out after being delayed by ΔTB, as shown in FIGURES 2(a) through 2(e). That is, the data read out from the buffer memories 3 and 5 are synchronized by the reference signal and the frames Am', Am+1', ... of the time base adjusted input image signal A and the frames Bn', Bn+1', ... of the time base adjusted input image signal B are read out with the same timing, as shown in FIGURES 2(b) and 2(d).

The image signals read out of the buffer memories 3 and 5 are applied to the terminals a and b of a switch 11, respectively. The switch 11 selectively changes over to terminal a or b by a change-over control signal that is applied through a terminal 12. For example, it is assumed that the switch 11 has selected the terminal a and the frames Am', Am+1', ... are being output based on the input image signal A, and then the switch 11 selects the terminal b in response to the change-over control signal at the change-over timing of the frames Am+2', Am+3', ... of the input image signal A. Subsequent to this change-over timing, the switch 11 selectively transmits the output from the buffer memory 5 and, as shown in FIGURE 2(e), the frames Bn+3', Bn+4', ... are output based on the input image signal B.

As the base band video signals A and B have been synchronized in this way, the frames Am+2' and Bn+3' are successively output. Further, in this case it is also necessary to take phase of color subcarrier into consideration.

In recent years, a system for recording or transmitting image information by encoding at high efficiency has become extensively in use. A proposal has been made in Japanese Patent Application Tokkai-Hei 4-14974, published as JP-A-5 211 763 20.08.93, "Moving Picture Coded Data Recording Method" for an editing apparatus to edit such high efficiency encoded (compressed) video signals in the encoded state. In this proposal, moving picture coded data is obtained by quantizing an input image signal after it has been intra-frame coded or interframe coded. When editing moving picture coded data in units of frame groups by assuming a group of the specified number of frames to be one (1) frame group, an edit flag is set for a frame group immediately after the edited group. Further, the sequence of coded frames is changed upon detection of this edit flag.

A coded quantity of high efficiency coded data per frame differs depending upon pattern and also, it differs depending upon whether the encoding method is by intraframe compression or by interframe compression. Accordingly, for editing high efficiency encoded video signals, it is indispensable that time bases of frames before and after the change-over point are in accord with each other. In the proposal described above, the editing and decoding in units of frames are possible when high efficiency coded video signals are changed over (edited) for each frame by bringing time bases of the frames to agree with each other.

However, in the above-mentioned proposal the editing of only one video signal was described. As the interframe compression has been adopted for the high efficiency encoding in addition to the intraframe compression, a significant problem may arise in that the decoding may become impossible when the edit is performed between the input image signals A and B. That is, the interframe compression is a method using the interframe correlation and only a differential value between the preceding and the current frame images is transmitted. Accordingly, a preceding frame decoding result is needed for decoding interframe compression signals. However, when compression data of a specific frame of the input image signal A is changed over to interframe compression data by bringing the time bases of both data to agree with each other, this interframe compression data cannot be decoded because there exists no preceding frame image signal of the interframe compression data of the input image signal B.

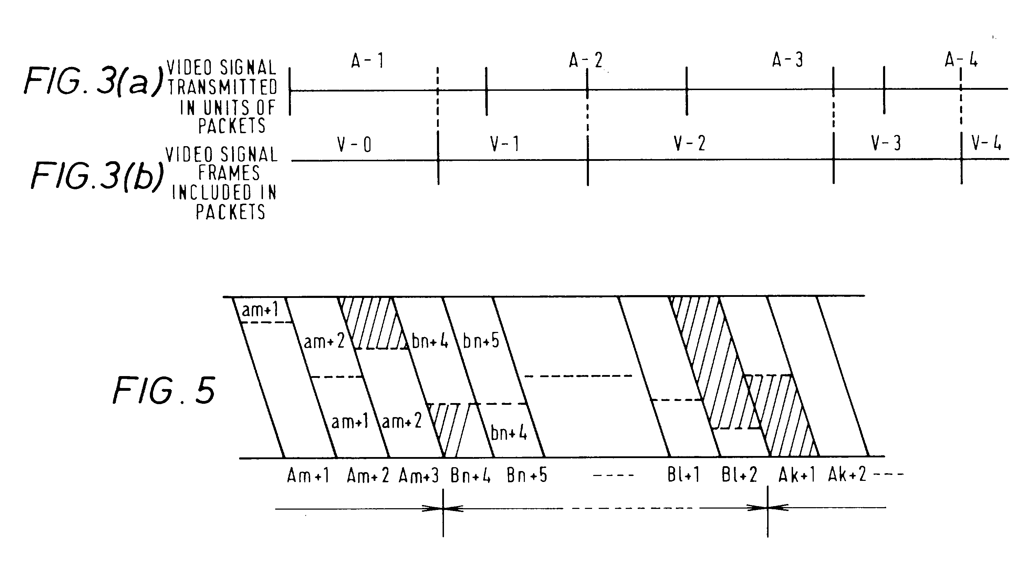

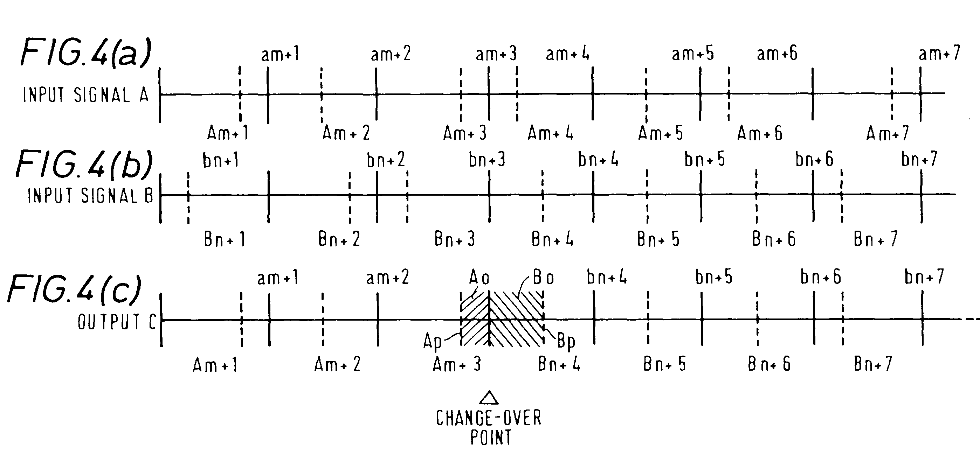

Further, when transmitting signals in units of packets, a problem also arises in that the editing of high efficiency coded signals and decoding of editing signals become difficult. FIGURES 3 and 4 are timing charts for explaining this problem.

FIGURE 3(a) shows that a video signal is transmitted in units of packets, i.e., packets A-1, A-2, A-3, .... Further, FIGURE 3(b) shows the video signal frames V-0, V-1, V-2, ... included in the packets, as shown in FIGURE 3(a). Each packet is in a fixed word length, as illustrated by a solid vertical line in FIGURE 3. Each frame has been encoded in variable length and its coded quantity varies for each frame.

Now, it is assumed that the input image signal A is transmitted in units of packets, i.e., packets am+1, am+2, am+3, ... and the boundary between the frames Am+1, Am+2 , Am+3, ... included in these packets is the broken lined part, as shown in FIGURE 4(a). Further, it is also assumed that the input image signal B is transmitted in units of packets, i.e., packets bn+1, bn+2, bn+3, ... and the boundary between the frames Bm+1, Bm+2, Bm+3, ... included in these packets is the broken lined part, as shown in FIGURE 4(b).

When an input image signal is transmitted in units of packets in this manner, boundaries of video frames are considered unclear and editing in units of video frames is difficult. Further, even when boundaries of frames are clear, the editing is difficult. For instance, when performing an edit to connect the frame Am+2 of the input image signal A with the frame Bn+4 of the input image signal B, the boundary between these frames exists between the packets am+3 and bn+4 but when the frame Am+2 is connected to the frame Bn+4, subsequent packets must be prepared newly in order to transmit frames subsequent to this connected point in a fixed word length.

Therefore, it is necessary to perform the edit in units of packets. That is, the packet am+3 is connected to the packet bn+4 in this case, as shown in FIGURE 4(c). However, when they are so connected, the edited data contains unnecessary parts AO and BO, which are the first half of the frame Am+3 and the latter half of the frame Bn+3, as illustrated by the shadowed portions in FIGURE 4(c). When decoding the output C after editing, all the unnecessary parts A0 and B0 from the point Ap in the drawing are decoded following the frames Am+1 and Am+2. That is, for instance, after decoding video signals corresponding to the upper half of the frame, the decoding of the unnecessary part B0 of the next packet bn+4 is started. However, it is not clear which part of the packet bn+3 is the unnecessary part Bo, or which part is the required data of frame Bn+4.

Furthermore, whether the decoding process is properly carried out is also uncertain and disturbance of an image is expected at this portion.

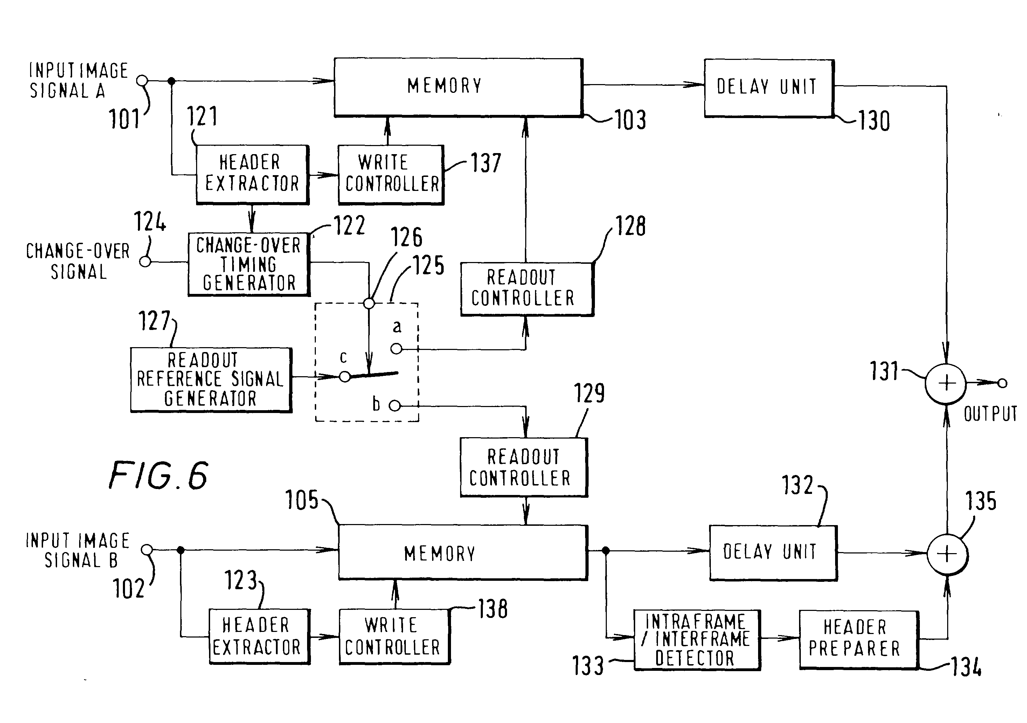

Further, the same problem as in the data transmission in units of packets exists in the editing of recorded signals in a VTR. FIGURE 5 is a drawing for explaining this problem.

Recorded quantity on each recording track of a magnetic tape is fixed but data quantities of the video frames am+1, am+2, ..., bn+1, bn+2, ... are not fixed. Therefore, the boundary between video frames lies at any position on a track, as shown in FIGURE 5. Accordingly, when video signals of the tracks Am+3 and Bn+4 are connected to each other, the unnecessary part, as illustrated by the shadowed portion in FIGURE 5, is produced. Even when the boundary between the frames am+2 and bn+4 becomes clear, in order to remove the unnecessary part it is required to record data midway of a track and it is not possible to remove an unnecessary part except in special cases. A disorder of an image is produced on a reproduced image by this unnecessary part.

As described above, when interframe compression signals were edited, a problem has arisen in that an image was disordered because the interframe compression signals (a differential image signal) are decoded using a predictive original image signal that is not related to the interframe compression signals. Further, when video signals recorded or transmitted in fixed word lengths of packets, etc. were edited, there was also such a problem that an image was disordered when decoding the video signals.

A method of recording coded motion picture data in an editable form is disclosed in EP 0 456 433. In this method, motion picture data is first coded using high-efficiency compression techniques, in which the data are intraframe or interframe coded. The motion picture data frames are recorded in groups of frames. The stored motion picture data may be edited by the overwriting of some groups of data frames. The position of the edited groups of frames is marked by the addition of an edit flag to the edited groups of frames, and to the groups of frames immediately after the edited group of frames. In this way, the editing operation can be carried out on each group of frames by discriminating the groups of frames, so that each group of frames is self sufficient and can be edited without reference to other frames.

A method and a device for processing multiple video signals to provide a picture-in-picture function for the display of at least one other video signal within the display of a main picture signal is disclosed in US 5,040,067. A device having inputs for at least two video signals is provided which enables one of the video signals to be displayed as a main picture, and the other to be stored in a memory and read out in synchronism with the main picture to form a picture-in-picture.

The present invention therefore seeks to provide a coded data editing apparatus and edited coded signal decoding apparatus which are capable of preventing a disturbance of an image at the edit point when interframe compression signals are edited and video signals in a fixed word length of packet, etc. are edited.

According to a first aspect of the invention, there is provided a compressed data editing apparatus comprising:
first storage means for storing a first video signal including compressed video data;
second storage means for storing a second video signal including compressed video data;
readout control means for forming an edited compressed data video signal from the first and second video signals by reading out the first and second video signals from the first and second storage means, respectively, and adjusting the time bases of the first and second video signals to agree with one another; and
header adding means for adding an edit header to data forming the edited compressed data video signal, to indicate interframe-coded data occurring subsequent to an editing point marking the transition between data read out from the first storage means and data read out from the second storage means.

According to a second aspect of the invention, there is provided a decoding apparatus for decoding an edited compressed data video signal formed from a sequence of data of first and second compressed data video signals, the edited compressed data video signal including edit headers indicating interframe-coded data occurring subsequent to an editing point marking the transition between data of the first compressed data video signal and data of the second compressed data video signal, the decoding apparatus comprising:
edit header extracting means for extracting an edit header from the compressed data video signal;
decoding means for decoding the compressed data video signal and outputting the decoded video signal, in accordance with the extracted header; and
substitute image replacing means for outputting a substitute image in response to a signal from the edit header extracting means, so that a substitute image is output instead of interframe coded data received after an editing point prior to the reception of intraframe coded data.

According to a third aspect of the invention, there is provided a compressed data editing apparatus comprising:
first storage means for storing fixed word length packets formed from compressed video data frames of a first video signal;
second storage means for storing fixed word length packets formed from compressed video data frames of a second video signal;
readout control means for forming an edited compressed data video signal from the first and second video signals by reading out packets of the first and second video signals from the first and second storage means, respectively, and adjusting the time bases of the first and second video signals to agree with one another; and
header adding means for adding an edit header to packets of data forming the edited compressed data video signal at a transition point between packets of the first video signal and of the second video signal, the edit header indicating that editing has occurred and indicating the position within that packet of a frame boundary marking the transition between frames of the first or second video signal forming part of the edited compressed signal and data of the first or second video signal not forming part of the edited compressed data video signal.

According to a fourth aspect of the invention, there is provided a decoding apparatus for decoding an edited compressed data video signal comprising a sequence of fixed word length packets formed from compressed video data frames of first and second compressed data video signals, the edited compressed data video signal including packets of data having an edit header indicating that editing has occurred and indicating the position within that packet of a frame boundary marking the transition between frames of the first or second video signal forming part of the edited compressed signal and data of the first or second video signal not forming part of the edited compressed data video signal, comprising:
edit header extracting means for extracting the edit header from the video signal;
decoding means for decoding the compressed data video signal and outputting the decoded video signal, in accordance with the extracted header; and
data start/end area detector, which controls the decoding means such that for each packet for which the edit header indicates that editing has occurred, decoding of data is inhibited in that portion of the packet corresponding to the data of the first or second video signal not forming part of the edited compressed data video signal on the basis of the frame boundary indicated in the edit header.

For a better understanding of the present invention and to show how it may be brought into effect, reference will now be made, by way of example,to the accompanying drawings, wherein:
FIGURE 1 is a block diagram showing a previously known coded data editing apparatus for editing baseband video signals;
FIGURES 2(a) through 2(e) are timing charts for explaining the operation of coded data editing apparatus shown in FIGURE 1;
FIGURES 3 and 4 are timing charts for explaining the problems encountered using the system shown in FIGURE 1;
FIGURE 5 is a diagram for explaining problems encountered using the system shown in FIGURE 1;
FIGURE 6 is a block diagram showing a first embodiment of the editing apparatus according to the present invention;
FIGURE 7 is a block diagram showing the edited signal decoding apparatus for decoding the signals edited by the editing apparatus of FIGURE 6;
FIGURE 8 is a diagram for explaining the operation of the editing apparatus of FIGURE 6;
FIGURE 9 is a diagram for explaining the decoding method of the edited signal decoding apparatus according to embodiments of the present invention;
FIGURES 10 and 11 are diagrams for explaining the editing of coded signals wherein intraframe data and interframe data each present within a single frame;
FIGURE 12 is an explanatory diagram for explaining the synchronization of two kinds of image signals A and B which are transmitted in units of frames;
FIGURES 13 and 14 are block diagrams showing editing apparatus and edited signal decoding apparatus according to a second embodiment of the present invention;
FIGURES 15 and 16 are block diagrams showing editing apparatus and edited signal decoding apparatus according to a third embodiment of the present invention;
FIGURE 17 is an explanatory drawing showing the editing signal; and
FIGURE 18 is an explanatory drawing showing the flow of operation of signal provided in FIGURE 17.

The present invention will be described in detail with reference to the FIGURES 6 through 18. Throughout the drawings, like or equivalent reference numerals or letters will be used to designate like or equivalent elements for simplicity of explanation.

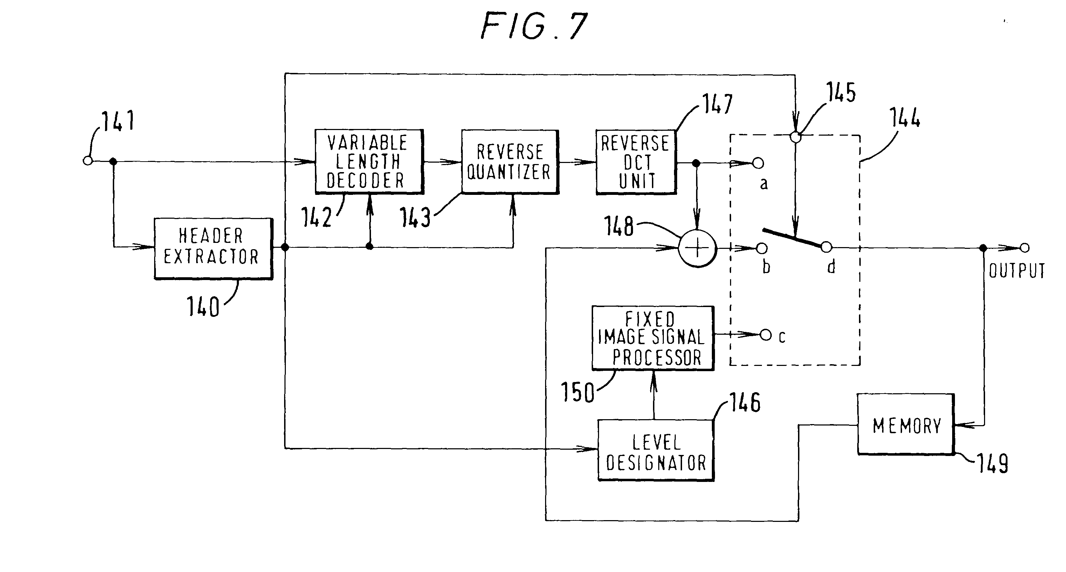

FIGURE 6 is a block diagram showing one embodiment of the editing apparatus according to the present invention. FIGURE 7 is a block diagram showing the edited signal decoding apparatus for decoding the signals edited by the editing apparatus. In this embodiment, the edit is performed between the compressed input image signals A and B. In addition, it is assumed that the input video signals are not in fixed word lengths packet format in this embodiment.

The high efficiency coded input image signals A and B are applied to the input terminals 101 and 102, respectively. The input image signals A and B consist of an intraframe compression picture (hereinafter referred to as an I picture), a forward predictive picture that is obtained by the interframe compression using a forward prediction (hereinafter referred to as P picture) and a bidirectional predictive picture (hereinafter referred to as B picture) that is obtained by the interframe compression using a bidirectional prediction. In this embodiment, the B picture is processed in the same manner as the P picture and a picture obtained by the interframe compression will be explained with reference to the P picture. Further, the number of interframes may be different between the image signals A and B.

The input image signal A that is supplied to the input terminal 101 is applied to a memory 103 and a header extractor 121. The header extractor 121 extracts a header contained in the input image signal A and outputs it to a write controller 137 and a change-over timing generator 122. The header consists of data indicating, for example, the leading portion and end of each frame. The write controller 137 controls the writing operations of the input image signal A to the memory 103 based on the header signal. Further, the input image signal B that is supplied to the input terminal 102 is applied to a memory 105 and a header extractor 123. The header extractor 123 extracts a header included in the input image signal B and outputs it to the write controller 138. The write controller 138 controls the writing operations of the input image signal B into the memory 105 based on this header signal.

A change-over signal generated immediately before the change-over point is applied to a terminal 124. This change-over signal is applied to the change-over timing generator 122. The change-over timing generator 122 obtains the frame end timing from the header and outputs a timing signal to a terminal 126 of a switch 125 at the frame end point immediately after the change-over signal is input. A readout reference signal generator 127 generates a reference signal for data read from the memories 103 and 105 and applies to a terminal c of the switch 125. The switch 125 changes over terminals a and b using the timing signal applied to its terminal 126 and provides the readout reference signal to one of readout controllers 128 and 129.

The readout controllers 128 and 129 control the readout operation of the data from the memories 103 and 105 based on the readout reference signal, respectively. The image signal A read out of the memory 103 is input to an adder 131 through a delay unit 130. The image signal B read out of the memory 105 is input to an adder 135 through a delay unit 132 and also to an intraframe/interframe detector 133. The intraframe/interframe detector 133 checks whether the readout image data is intraframe compression frame data (hereinafter referred to as intraframe data) or interframe compression frame data (hereinafter referred to as interframe data) and outputs the result of this detection to a header preparer 134. The header preparer 134 prepares an edit header to be added to interframe data and outputs it to the adder 135. Further, the edit process header is represented by 1 bit for every unit of compensation process.

The delay unit 132 outputs the image signal B read out of the memory 105 to the adder 135 by delaying it so that an edit header is added to the leading portion of a frame. The adder 135 outputs interframe data of the image signal B with the edit header added to the adder 131. The delay unit 130 outputs the image signal A from the memory 103 to the adder 131 by delaying it for a time equivalent to a delay time of the delay unit 132 and a processing time of the adder 135. The adder 131 multiplexes the output of the delay unit 130 and the output of the adder 135.

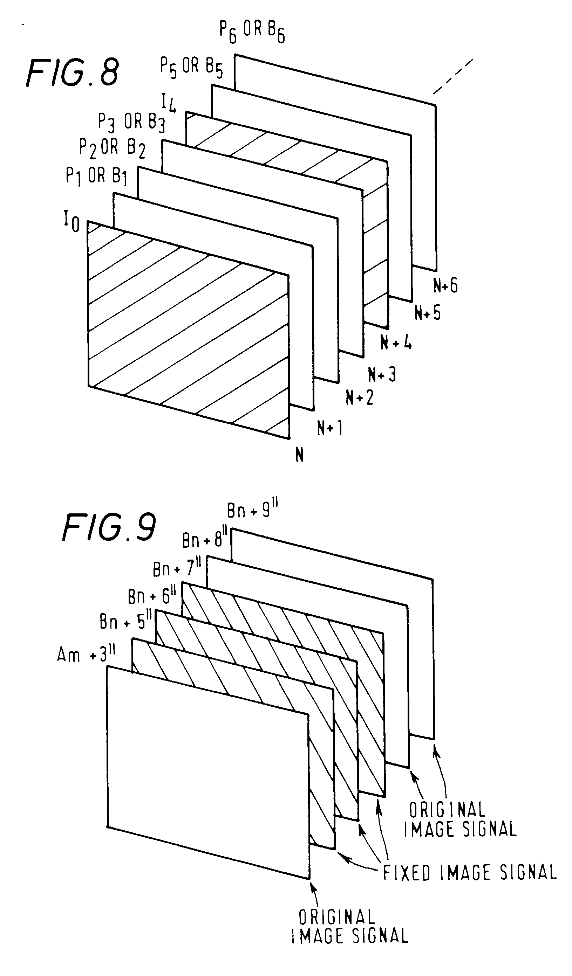

Referring now to FIGURE 8, the operation of the editing apparatus which is constructed as described above will be explained.

The input image signals A and B to be given to the input terminals 101 and 102 are comprised of four frames Am through Am+3, and Bn through Bn+3, each of which is composed of one intraframe IO and three interframes P2 through P4 and thereafter, one intraframe (shadowed section) is provided for every four frames. The input image signals A and B which are supplied to the input terminals 101 and 102 are applied to the memories 103 and 105, respectively and also, to the header extractors 121 and 123 for extracting a header. The write controllers 137 and 138 control the writing operations to the memories 103 and 105 based on write signals contained in the headers, respectively.

Now, when assuming that the frame Bn+5 of the input image signal B is to be connected after the frame Am+3 of the input image signal A, first, the switch 125 selects the terminal a. The readout reference signal from the readout reference signal generator 127 is supplied to the readout controller 128 via the switch 125 and the data of the frames Am, Am+1, Am+2 and Am+3 stored in the memory 103 are read out successively and output to the delay unit 130 by the readout controller 128. When a change-over signal is given to the change-over timing generator 122 through the terminal 124 immediately before the end point of the frame Am+3, the change-over timing generator 122 obtains the frame end point according to a header data from the header extractor 121 and sends a timing signal to the terminal 126 of the switch 125 at the end point of the frame Am+3. As a result, the switch 125 changes over the terminal a to the terminal b at this timing and gives the readout reference signal to the readout controller 129. The readout operation of the data from the memory 105 is controlled by the readout controller 129 and the frame Bn+5 data is output to the adder 135 through the delay unit 132. The change-over to the frame Bn+5 of the input image signal B may be decided by an external signal (not shown) or by internally obtaining a timing that is most close to the frame Am+3.

The frames Bn+5, Bn+6, ... read out of the memory 105 are given to the intra/inter detector 133. The intra/inter detector 133 detects whether the data of the frames Bn+5, Bn+6, ... are the intraframe data or the interframe data and outputs the detected result to the header preparer 134. Based on this detection result the header preparer 134 prepares an edit header indicating whether they are the interframe data and outputs it to the adder 135. The frame data delayed by the delay unit 132 has been given to the adder 135. The adder 135 outputs this frame data to the adder 131 with the prepared header added to its leading portion. Thus, following the frames Am, Am+1, Am+2, Am+3, ..., the adder 131 multiplexes and outputs the frames Bn+5, Bn+6, ... added with the edit header showing whether the encoding method is the interframe compression.

In this manner, in this embodiment the editing is performed for every frame and an interframe data subsequent to the connection is added with an edit header showing that the data is an interframe compression data.

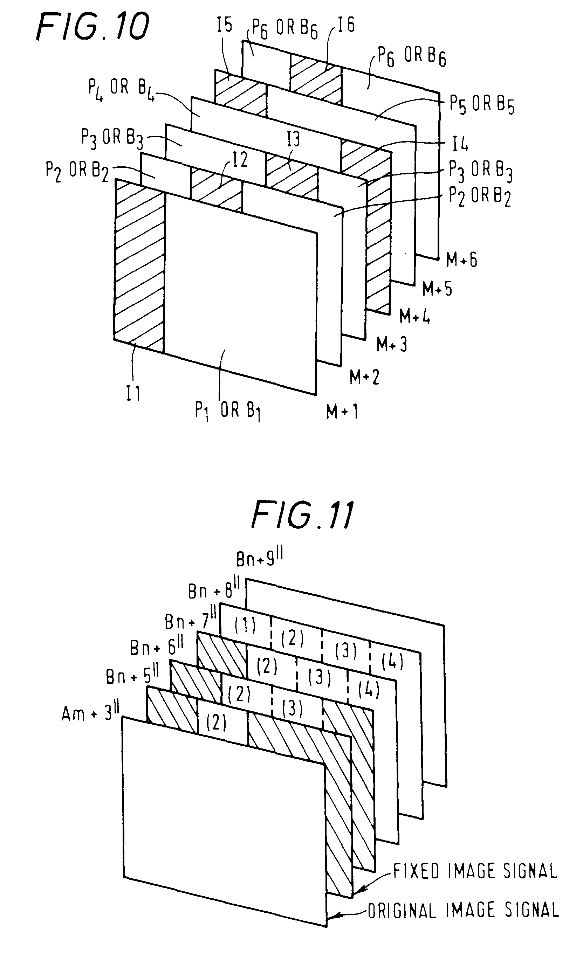

Referring now to FIGURE 9, the decoding method of the edited signal decoding apparatus according to the present invention will be explained.

As described above, it is assumed that following the frame Am+3 based on the input image signal A, the frame Bn+5 based on the input image signal B is connected. The edited frames Am+3'', Bn+5'', Bn+6'', Bn+7'', Bn+9'', Bn+10'', ... are the P picture while the frames Bn+8'', Bn+12'', ... are the I picture. The decoding of an I-picture frame is possible using that image only, but with the P-picture frames, the original image cannot be restored,as the predictive image required for decoding, as mentioned above, does not exist. So, in this embodiment, substitute images are-prepared in advance (for instance, a black image of specific level) and are used as replacements for these three images. That is, the substitute images are displayed at the editing boundary (when a video is changed over) on the frame and an effect similar to the fade effect is obtained.

In FIGURE 7, the editing signal from the adder 131, as shown in FIGURE 6, is supplied to an input terminal 141. Here, it is assumed that the input image signals A and B are encoded in variable length coding,such as Huffman coding after the DCT (Discrete Cosine Transformation) process and quantizing process. The editing signal is given to a variable length decoder 142 and a header extractor 140. The header extractor 140 extracts an edit header from the editing signal, decodes various header signals and quantizing information, outputs them to the variable length decoder 142, a reverse quantizer 143, a terminal 145 of a switch 144 and a level designator 146.

The variable length decoder 142 decodes the editing signal in variable length based on header information and provides it to the reverse quantizer 143. The reverse quantizer 143 reverse quantizes the output of the variable decoder 142 and outputs the result to the reverse DCT unit 147. The reverse DCT unit 147 reverse DCT processes this reverse quantizing output and outputs the result to the terminal a of the switch 144 and an adder 148.

The switch 144 selects terminals a, b or c based on the header information provided from the header extractor 140. That is, the switch 144 selects the terminal a when the header information indicates the intraframe data and selects the terminal b when the interframe data is indicated. Further, when the edit header indicates interframe data before the first intraframe data after the editing point, the switch 144 selects the terminal c. The signal from a terminal d of the switch 144 is output as a decoded signal and applied to a memory 149.

The memory 149 outputs the decoded signal to the adder 148 after storing it for the period of one frame. The adder 148 adds up the decoded output (a differential signal) of the interframe data from the reverse DCT unit 147 with the decoded output of the preceding frame from the memory 149 to regenerate the current frame data and outputs it to the terminal b of the switch 144.

In this embodiment, the edit header from the header extractor 140 is also given to a level designator 146. The level designator 146 outputs a specified fixed image signal value to a fixed image signal processor 150 While decoding an interframe before the first intraframe after the editing point, according to the edit header. The fixed image signal processor 150 outputs an image signal to display an image at a specified level to the output terminal c of the switch 144 based on a fixed image signal value from the level designator 146. Further, the level designator 146 may be omitted. In addition, the output from the level designator 146 may not necessarily be controlled according to-the edit header.

Now the operation of the above embodiment constructed as described will be explained.

The editing signal that is supplied through the terminal 141 is input to the header extractor 140 for extracting a header. Here, it is assumed to decode the frames Am+3, Bn+5'', Bn+6'', ... after the editing of the image signals A and B, as shown in FIGURE 9. The frame Am", which is an intraframe, is restored to the original signal before encoding by the variable length decoder 142, the reverse quantizer 143 and the reverse DCT unit 147, and is supplied to the terminal a of the switch 144. The switch 144 selects the terminal a according to the header information from the header extractor 140 and outputs the decoded data of the frame Am''.

When the frames Am+1'', Am+2'' and Am+3'' are input, the switch 144 selects the terminal b since they are interframes. The output from the reverse DCT unit 147 in this case is a differential value with the preceding frame and the adder 148 decodes the original signal by adding the decoded signal of the preceding frame Am", Am+1'' or Am+2'' and the output of the reverse DCT unit 147 and outputs the decoded original signal to the terminal c. Thus, the decoded output is obtained at the terminal d of the switch 144.

Next frame Bn+5'' is an interframe after the editing point and the switch 144 selects the terminal c according to the edit header. The level designator 146 outputs, for instance, a black level signal to the fixed image signal processor 150 and the fixed image signal processor 150 outputs the black level image signal through the terminal c of the switch 144. The similar operation is performed in next frames Bn+6'' and Bn+7''.

Then, when the frame Bn+8'' is input, since frame Bn+8'' is an intraframe the switch 144 selects the terminal a according to the header information. The frame Bn+8'' is an intraframe and the switch 144 directly outputs the decoded output from the reverse DCT unit 147. Then, when the frame Bn+9'' is input, the switch 144 selects the terminal b and obtains the decoded output by selecting the output from the adder 148.

Thus, in this embodiment, for interframe data before the first intraframe after the editing point, a fixed image signal is output without decoding signals, and disturbance of the image immediately after the editing point is thus prevented. Further, it is possible to designate a substitute image level which is displayed by the level designator 146 and to obtain an effect similar to the fade effect.

FIGURES 10 and 11 show an example wherein coded signals are given to the editing apparatus, and intraframe data and interframe data are compressed within one frame without discriminating them to be only intraframe or interframe data for each frame. Thus, the data transmission rate after encoding is averaged.

That is, as shown by the shadowed portion in FIGURE 10, the intraframe compression frame I is divided into five parts: I1 through I5, which are arranged in specified regions of the interframe compression frame P (or B). That is, the frame M+1 is composed of the intraframe compression frame I1 data and the interframe compression frame P1 data, the frame M+2 arranges the intraframe compression frame I2 data between the interframe compression frames P2 and P2. Similarly, for the frames M+3 and M+4, the intraframe compression frame I3 is arranged between the interframe compression frames P3 and P3, and for the frames M+4 and M+5, the interframe compression frames I4 and P5 and the intraframe compression frames I4 and I5 are arranged, respectively. It is thus possible to encode all regions by arranging the intraframe compression frames circularly in five frames.

This embodiment is best suited for such coded data editing. Similarly to FIGURE 10, it is now assumed that the image signals A and B which are circularly arranged by dividing an intraframe compression frame, four parts are to be edited. That is, by connecting the frame Am+3 based on the image signal A with the frame Bn+5 based on the image signal B in units of frames, the edited frames Am+3'', Bn+5'', Bn+6'', Bn+7'', Bn+8'', ... are obtained (FIGURE 11).

The frame Am+3'' can be decoded using the preceding frame Am+2''. The section (2) of the next frame Bn+5'', as shown in FIGURE 11, is an intraframe data, while the other sections (shadowed section) are interframe data. The switch 144 selects the terminal a according to the header information from the header extractor 140 when data corresponding to the section (2) of the intraframe data is input, and selects the terminal c when data corresponding to the other section is input. Thus, when a display is made using the decoded output of the frame Bn+5'', an image corresponding to the image signal B is displayed for a part of the screen corresponding to the section (2) and a substitute image is displayed for the other section based on the output from the fixed image signal processor 150.

The decoded output of the frame Bn+5'' is given to the memory 149 for storage. When decoding next frame Bn+6'', a decoded output corresponding to the section (2) stored in the memory 149 is used. That is, the switch 144 selects the terminal b at a timing corresponding to the section (2) according to the header information, reads the decoded output of the section (2) out of the memory 149 via the adder 148, and outputs it. Next, when data (intraframe data) corresponding to the section (3), as shown in FIGURE 11, is input, the switch 144 selects the terminal a and outputs the decoded output from the reverse DCT unit 147. The other sections (shadowed section) of the frame Bn+6'' are interframe data and the switch 144 selects the terminal c at an input timing of this data and outputs a signal to display a substitute image. When the substitute image is displayed using the decoded output of the frame Bn+6'', images corresponding to the image signal B are displayed on parts of the screen corresponding to the sections (2) and (3) and the substitute image is displayed for the other section.

Thereafter, the decoded sections of the interframe are increased successively in the similar manner. That is, the sections (4) and (1) in the frames Bn+7'' and Bn+8'' are intraframe data and the other section (shadowed section) is interframe data. When decoding the frame Bn+7'', the decoded outputs for the sections (2) and (3) obtained by decoding frames up to the preceding frame are used and at the same time, the decoded output of the section (4) is output. Then, when decoding the frame Bn+8'', the decoded outputs for the sections (2), (3) and (4) obtained by decoding frames up to the preceding frame are used and at the same time, the decoded output of the section (1) is selectively output. Thus, one picture plane of the image signal B is reproduced in four frame periods.

Thus, in this embodiment it is possible to reproduce the original image although there is a certain time lag. Further, as all sections of a substitute image are replaced to the image signal B successively until the image signal B is completely reproduced after the editing, the visual effect at the editing point is not so greatly disturbed.

In the same manner as in decoding the frame Bn+6'' where the section (2) of the frame Bn+5'' was used directly, the decoded output of the preceding frame is used directly in the above explanation. However, when the section (2) of the frame Bn+5'' corresponding to the section (2) of the frame Bn+6'' is usable as a predictive image, it is clearly better to update the section (2) by adding the decoded output of the section and a differential value by the adder 148.

Further, a bidirectional predictive picture (B picture) is not considered in this embodiment. When a frame before the editing paint of the image signal A is the B picture, this B picture cannot be reproduced as there is no predictive image for the B picture. In this case, a substitute image can be used for this image signal A.

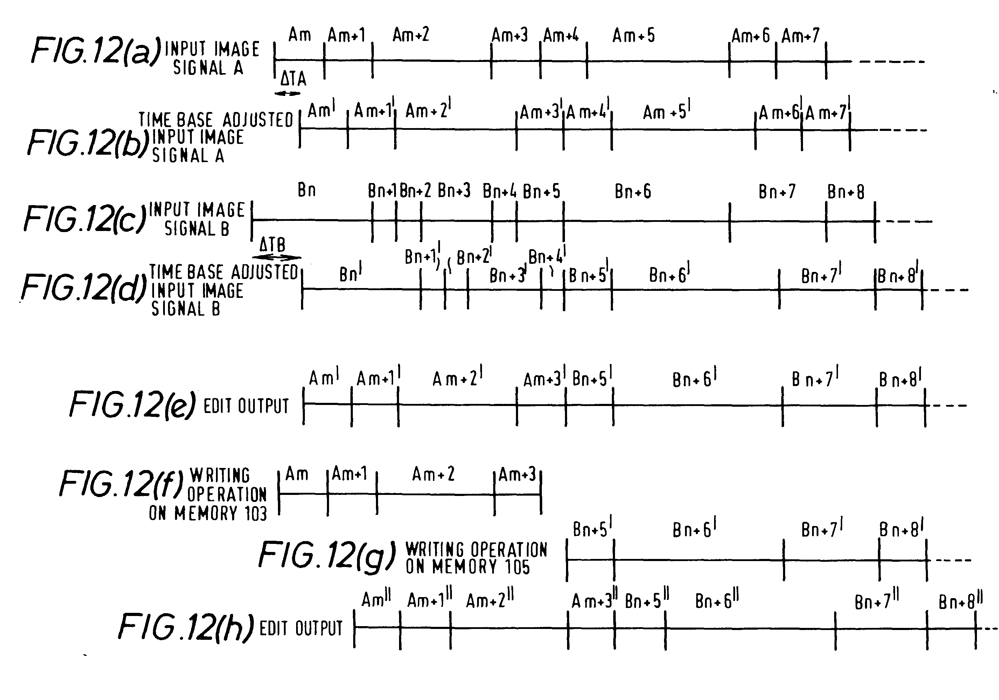

FIGURE 12 is an explanatory drawing for explaining the synchronization of two kinds of image signals A and B which are transmitted in units of frames. FIGURE 12(a) shows the input image signal A. FIGURE 12(b) shows the time adjusted image signal A. FIGURE 12(c) shows the input image signal B. FIGURE 12(d) shows the time adjusted image signal B. FIGURE 12(e) shows the editing output using the time adjusted image signals A and B. FIGURE 12(f) shows the writing operations to the memory 103. FIGURE 12(g) shows the writing operations to the memory 105. And FIGURE 12(h) shows the editing output.

Encoding quantity of each frame Am, Am+1, Am+2, ...., Bn, Bn+1, Bn+2, ... of the input image signals A and B, as shown in FIGURES 12(a) and 12(c), is indefinite. So, in order to make times at the editing points of these image signals A and B agree with each other, the image signals A and B are once written into memories. Then, by reading them out in units of frames, the image signals A and B delayed by ΔTA and ΔTB (FIGURES 12(b), 12(d)) are obtained. The editing points are the end point of the frame Am+3' and the start point of the frame Bn+5' and they are in accord with each other in point of time, as shown in FIGURES 12(b) and 12(d). By changing over the outputs of the memories storing the image signals A and B, the editing output, as shown in FIGURE 12(e), is obtained.

It is possible to connect the image signals A and B without considering the delay times ΔTA and ΔTB by noting read addresses corresponding to the editing points while writing the image signals A and B in units of frames into the memories 103 and 105, as shown in FIGURE 6. That is, the memory 103 outputs the frames Am, Am+1, Am+2, ... of the image signal A (FIGURE 12(f)) written in units of frames directly or delaying them (FIGURE 12(h)). On the other hand, the image signal B is stored in the memory 105 in units of frames (FIGURE 12(g)). Simultaneously with the end of the readout operation of the frame Am+3 from the memory 103, the memory 105 starts to read the frame Bn+5 of the image signal B out of the storing address. As a result, the frames Am+3 and Bn+5 are connected and the synchronization of the image signals A and B is performed, as shown in FIGURE 12(h). Further, in order to obtain a readout starting position, it is necessary to make it possible to catch the end point of each frame at writing operations to the memories.

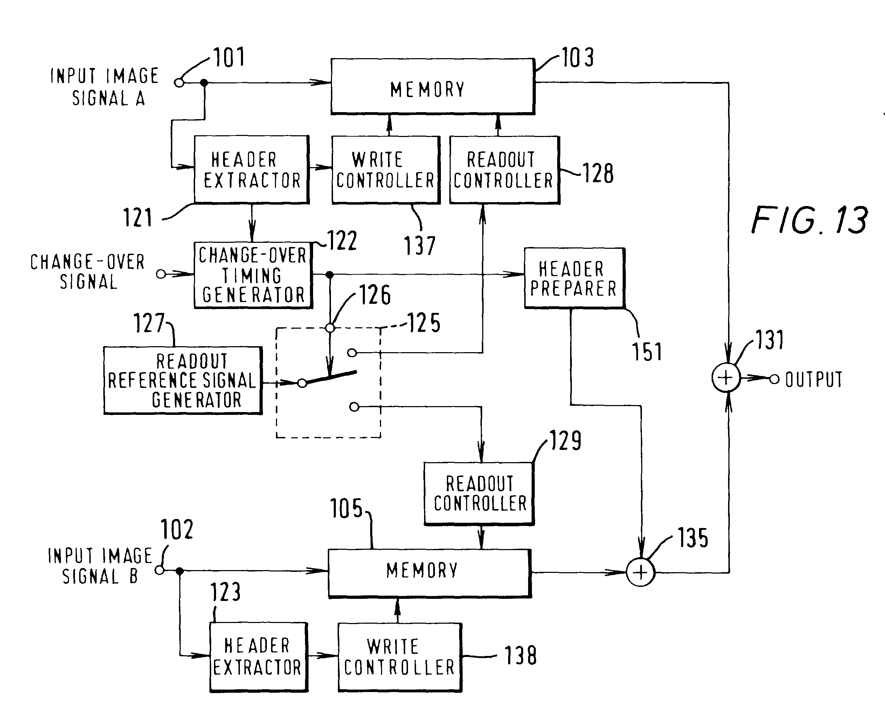

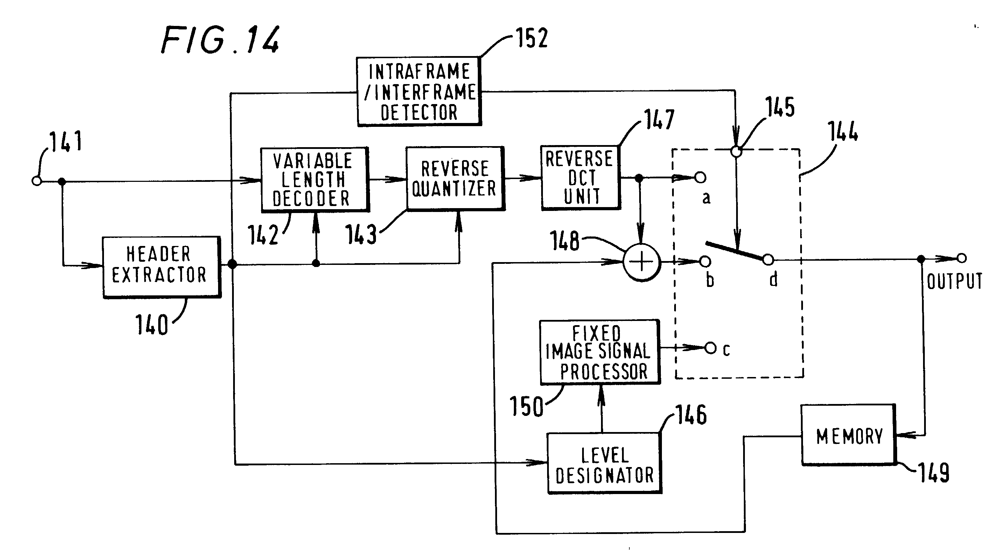

FIGURES 13 and 14 are block diagrams showing the editing apparatus and the edited signal decoding apparatus according to a second embodiment of the present invention, respectively. In FIGURES 13 and 14, the same composing elements as FIGURES 6 and 7 are given with the same numerals and explanations are omitted.

In the first embodiment shown in FIGURES 6 and 7, a method was adopted wherein an edit header was added at the time of editing to those frames which were to be replaced by a substitute image during decoding.

In this embodiment, frames to be replaced with a substitute image are identified at the time of decoding. The editing apparatus in this embodiment eliminates the intraframe/interframe detector. The image signal B read from the memory 105 is given directly to the adder 135. The output from the change-over timing generator 122 is also given to the header preparer 151, which in turn prepares a header signal and outputs it to the adder 135. The adder 135 outputs the image signal B to the adder 131 with the header signal added.

In the editing apparatus of this embodiment, a header is simply added to each frame.

On the other hand, the edited signal decoding apparatus of this embodiment differs from FIGURE 7 in that an intraframe/interframe detector is added. The header information from the header extractor 140 is given to the intraframe/interframe detector 152, which in turn detects whether the input frame is the intraframe or interframe according to the header information and at the same time, controls the switch 144 by detecting whether the input frame is an interframe or an intraframe, and further detecting whether the input frame is interframe prior an intraframe or not.

In this embodiment, even when the edited signal is not added with an edit header indicating that it is an interframe immediately after the editing point, but before an intraframe, the switch 144 is controlled by detecting this interframe by the intraframe/interframe detector 152. Other operations and effects are the same as the embodiment, as shown in FIGURES 6 and 7.

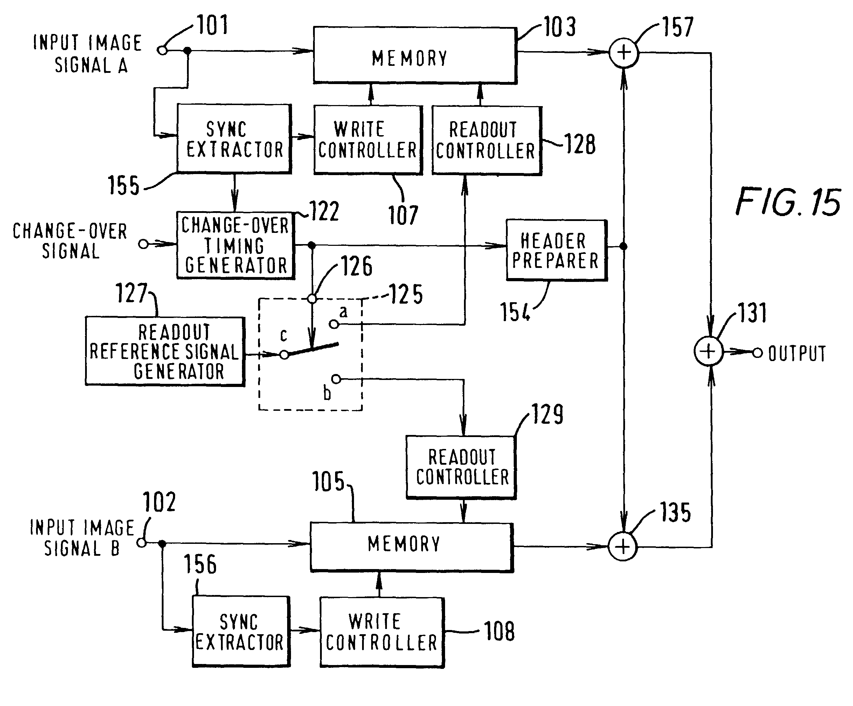

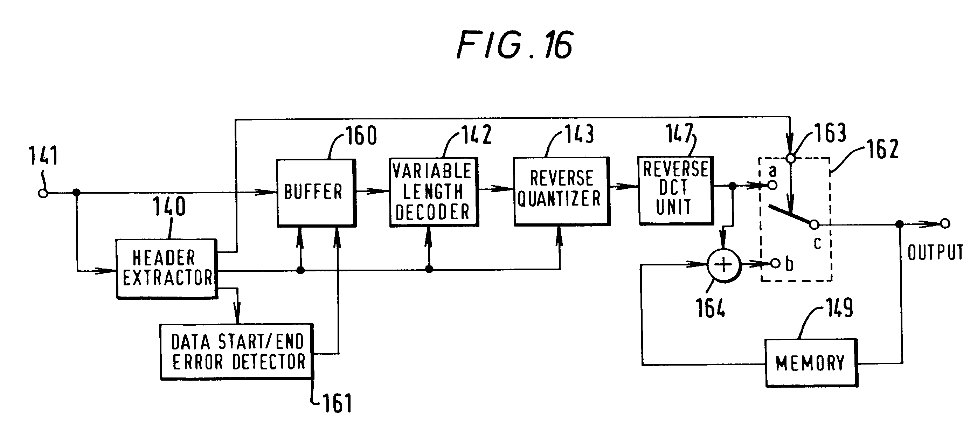

FIGURES 15 and 16 are block diagrams showing the editing apparatus and the edited signal decoding apparatus according to a third embodiment of the present invention, respectively. In FIGURES 15 and 16, the same composing elements as in FIGURES 7 and 13 are given with the same numerals and explanations are omitted.

The embodiments as described above are examples when two kinds of image signals A and B are not divided into packets. However, this third embodiment will be explained for a case where two kinds of image signals A and B have been divided into packets. Even when image signals are transmitted in units of packets, it is possible to add a header to each of the image signals A and B.

The editing apparatus according to this embodiment employs the synchronous extractors 155 and 156 instead of the header extractor. The synchronous extractors 155 and 156 are supplied with the input image signals A and B through the input terminals 101 and 102, and separate a sync signal therefrom which is then output to write controllers 107, 108 and the change-over timing generator 122. A packet can be further divided into smaller units by the sync signal. The write controllers 107 and 108 control the writing operations of the image signals A and B into the memories 103 and 105. When a change-over signal is given, the change-over timing generator 122 outputs a timing signal to the header signal preparer 154 to insert an edit header into a packet at the editing point. The header signal preparer 154 prepares a header including an edit header showing that the editing was performed and outputs this header to the adders 135 and 157. The adder 157 adds the header from the header preparer 154 to the image signal A from the memory 103 and outputs the added signal to the adder 131.

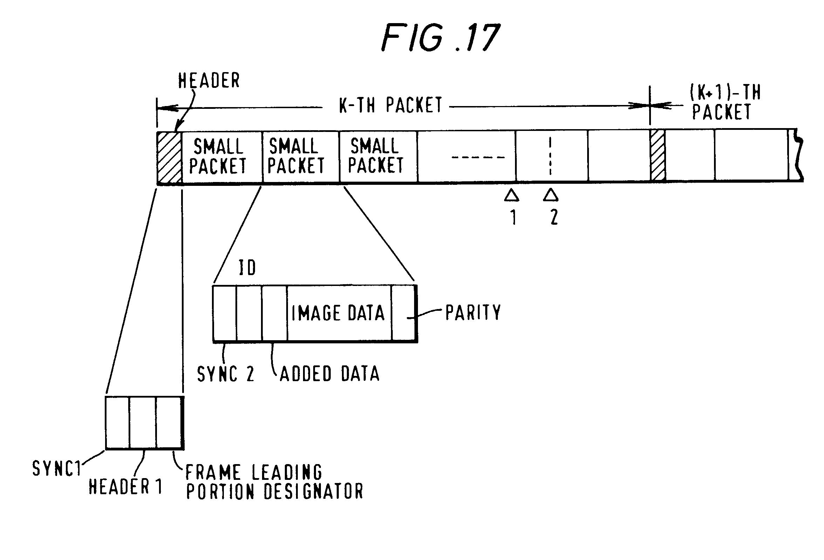

Referring now to FIGURE 17, the operation of the embodiment as described above will be explained. FIGURE 17 is an explanatory drawing showing the editing signal.

From the input image signals A and B that are provided to the apparatus through the input terminals 101 and 102, sync signals showinc smaller units contained in the packet are extracted by the synchronous extractors 155 and 156, respectively. The write controllers 107 and 108 control the writing operations of the input image signals A and B to the memories 103 and 105 according to the sync signal. Now, it is assumed that the packet bn+4 of the image signal B is connected following the packet am+3 of the image signal A. First, the switch 125 selects the terminal a, the readout reference signal generator 127 supplies a readout reference signal through the switch 125 to the readout controller 128, causing the image signal A to be read out of the memory 103, and input to the adder 157.

At one packet before ending the readout operation of the packet am+3, a change-over signal is given to the change-over timing generator 122. When the change-over from the image signal A to the image signal B is directed by this change-over signal, the change-over timing generator 122 directs the header signal preparer 154 to prepare such a header as an edit header. The header signal preparer 154 prepares headers including editing data and outputs to the adder 157. The adder 157 outputs to the adder 131 the packet am+3 of the image signal A with an edit header added. Thus, the header (shadowed section) is added in the leading portion of each packet, as shown in FIGURE 17. The header consists of, for instance, a sync signal SYNC1, a Packet Number (k), a Header 1 indicating other information and a frame leading portion indicator. In addition, one bit edit header is set for the Header 1. The edit header of the packet am+3 represents that editing has been conducted.

Each packet consists of a plurality of small packets and a header may indicate small packet number Δ1 and byte position Δ2 in addition to a frame leading portion indicator. The boundary between successive video frames is indicated by the small packet number Δ1 or the byte position Δ2, as shown in FIGURE 17, the small packet has a sync signal SYNC2, an ID indicating a small packet number, an additional data and an error correction parity in addition to image data.

The change-over timing generator 122 forces the switch 125 to select the terminal b at the time when the readout operation of the packet am+3 is over. The packets bn+4, bn+5, ... of the image signal B are read out of the memory 105 successively and given to the adder 135 under the control of the readout controller 129. The header signal preparer 154 prepares a header and supplies it to the adder 135. The adder 135 adds the header to the leading portion of the packet bn+4 data of the image signal B and outputs it to the adder 131. Further, the editing header of the packet bn+4 shows that the editing was conducted.

When the position of a frame to be edited can be specified, an edit header may be added only to the portion corresponding to this frame.

In the edited signal decoding apparatus, an editing signal that is given through the input terminal 141 is given to the variable length decoder 142 through a buffer 160, as shown in FIGURE 16. The header extractor 140 extracts a header of the editing signal and controls the buffer 160, variable length decoder 142, reverse quantizer 143, switch 162 and data start/end area detector 161.

The data start/end area detector 161 detects portions equivalent to the unnecessary sections A0 and B0, as shown in FIGURE 4(c). That is, when it is represented by an edit header, that the editing was conducted the data start/end area detector 161 first detects the position of Δ1 or Δ2 (the boundary position of video frames), as shown in FIGURE 17, according to the frame boundary indicator included in the header in the leading portion of the packet am+3 data and obtains a period from this portion to the leading portion of next packet bn+4 data. Then, the data start/end area detector 161 catches the video frame boundary position (Δ1' or Δ2') according to the header in the leading portion of the frame data and obtains a period from the leading portion of the packet bn+4 data to the Δ1' or Δ2'. The data start/end area detector 161 sets up these two periods as the invalid periods and inhibits the readout operation of data corresponding to these invalid periods by controlling the buffer 160.

The switch 162 is provided with header information through a terminal 163 and selects the terminal a when the decoded output of intraframe data is given from the reverse DCT unit 147. When interframe data is decoded, an adder 164 adds a differential value from the reverse DCT unit 147 with the preceding frame data from the memory 149 and outputs the decoded output.

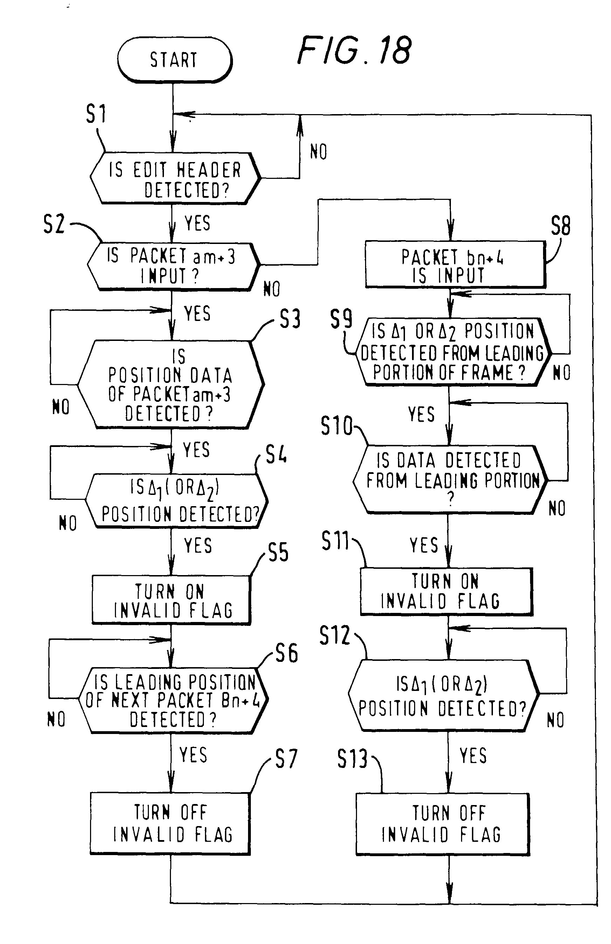

Referring now to FIGURE 18, the operation of the embodiment in this construction will be explained. FIGURE 18 shows the flow of operation of this embodiment.

An editing signal with the packets am+3 and bn+4 connected is supplied to the input terminal 141, as shown in FIGURE 4. Further, the packet am+3 of the image signal A before edit includes the latter half of the frame Am+2 and the first half of the frame Am+3 and the packet bn+4 of the image signal B before edit includes the latter half of the frame Bn+3 and the first half of the frame Bn+4, as shown in FIGURE 4.

The editing signal is given to the buffer 160 and also, to the header extractor 140 for extracting a header. The data start/end area detector 161 detects an edit header in the step S1, as shown in FIGURE 18, and judges whether an edit was conducted. The edit headers of the packets am, am+1, am+2, show that no edit was performed and the data start/end area detector 161 reads these packets out of the buffer 160 and provides them to the variable length decoder 142. The variable length decoder 142 decodes the packet data. Further, the output of the variable length decoder 142 is supplied to the terminal a of the switch 162 after the reverse quantizing process and reverse DCT process.

When intraframe data is represented by the header information, the output of the reverse DCT unit 147 is given to the switch 162 as a decoded output, while when interframe data is represented by the header information, the output of the adder 164 which adds up the output of the reverse DCT unit 147 with the preceding frame data from the memory 149 is transmitted as a decoded output.

Next, when the packet am+3 is input, it is detected that the edit was performed in the step S1 by the edit header. The data start/end area detector 161 moves the process to the step S3 via the step S2 and detects the Δ1 or Δ2 position of the packet am+3 (the start position of the frame am+3). When the Δ1 or Δ2 position is detected in the step S4, the data start/end area detector 161 turns an invalid flag on in the step S5. Then, when the leading portion of next packet bn+4 data is detected in the step S6, the data start/end area detector 161 turns the invalid flag off in the step S7. That is, the data start/end area detector 161 designates the period from the Δ1 or Δ2 position to the leading portion of next packet bn+4 data as an invalid period and inhibits the buffer 160 to output data corresponding to this invalid period.

Then, when the packet bn+4 is input, the data start/end area detector 161 detects that the edit was performed according to an edit header in the step S1 and moves the process to the step S9 through the steps S2 and S8. The data start/end area detector 161 detects the top data of the packet and turns the invalid flag on in the steps S9 through S11. Then, when the data start/end area detector 161 detects the Δ1' or Δ2' position (the end position of the frame bn+3) in the step S12, it turns the invalid flag off in the step S13. That is, the data start/end area detector 161 designates the period from top data of the packet Bn+4 to the Δ1' or Δ2' position (the end position of the frame. bn+3) as an invalid period and inhibits to read data corresponding to this period out of the buffer 160. Thus, data corresponding to the unnecessary portions A0 and B0 is not output from the buffer 160 nor decoded.

When the data start/end area detector 161 detects the unnecessary portion, the data read out from the buffer 160 is skipped to the next effective data portion so as not to decode unnecessary data in this embodiment. As a result, disturbance of the images at the editing points is prevented.

Further, in this embodiment it is not considered that the effective frame of the first packet of the image signal B connected to the image signal A is an interframe. When this frame is an interframe, it is better to process this frame in combination with the embodiment shown in FIGURE 7. Further, although the edit header showing that the edit was performed was set at two packets before and after the editing point, it is clear that the header can be set at either one of them.

Further, this embodiment is also applicable to the edit and decoding of recorded data of a VTR. In the edit using a VTR, when it is assumed that the recording tracks Bn+4 through B1+2 of the recorded image signal B are connected between the recording tracks Am+3 and Ak+1 of the recorded image signal A, as shown in FIGURE 5, it is difficult to add a header to data of tracks Am+3 and Ak+1 or to rewrite the header. So, in this case a header is added to the tracks Bn+4 and B1+2. Even in this case, however, it is possible to set an invalid period for the track Am+3 one track before the track Bn+4 and the track Ak+1 one track after the track B1+2 by making the buffer capacity large and the same effect as in packets can be obtained.

As described above, the present invention can provide an extremely preferable coded data editing apparatus and edited coded signal decoding apparatus.

## Claims

1. A compressed data editing apparatus comprising:
first storage means (103) for storing a first video signal including compressed video data;
second storage means (105) for storing a second video signal including compressed video data;
readout control means (128,129) for forming an edited compressed data video signal from the first and second video signals by reading out the first and second video signals from the first and second storage means (103,105), respectively, and adjusting the time bases of the first and second video signals to agree with one another; and
header adding means (132,133,134,135,151,154,157) for adding an edit header to data forming the edited compressed data video signal, to indicate interframe-coded data occurring subsequent to an editing point marking the transition between data read out from the first storage means and data read out from the second storage means.

2. A decoding apparatus for decoding an edited compressed data video signal formed from a sequence of data of first and second compressed data video signals, the edited compressed data video signal including edit headers indicating interframe-coded data occurring subsequent to an editing point marking the transition between data of the first compressed data video signal and data of the second compressed data video signal, the decoding apparatus comprising:
edit header extracting means (140) for extracting an edit header from the compressed data video signal;
decoding means (142,143,144) for decoding the compressed data video signal and outputting the decoded video signal, in accordance with the extracted header; and
substitute image replacing means (150), for outputting a substitute image in response to a signal from the edit header extracting means (140), so that a substitute image is output instead of interframe coded data received after an editing point prior to the reception of intraframe coded data.

3. The decoding apparatus as claimed in claim 2, further comprising means for determining whether the received edited compressed data video signal is interframe or intraframe coded.

4. A compressed data editing apparatus comprising:
first storage means (103) for storing fixed word length packets formed from compressed video data frames of a first video signal;
second storage means (105) for storing fixed word length packets formed from compressed video data frames of a second video signal;
readout control means (128,129) for forming an edited compressed data video signal from the first and second video signals by reading out packets of the first and second video signals from the first and second storage means (103,105), respectively, and adjusting the time bases of the first and second video signals to agree with one another; and
header adding means (132,133,134,135,151,154,157) for adding an edit header to packets of data forming the edited compressed data video signal at a transition point between packets of the first video signal and of the second video signal, the edit header indicating that editing has occurred and indicating the position within that packet of a frame boundary marking the transition between frames of the first or second video signal forming part of the edited compressed signal and data of the first or second video signal not forming part of the edited compressed data video signal.

5. A decoding apparatus for decoding an edited compressed data video signal comprising a sequence of fixed word length packets formed from compressed video data frames of first and second compressed data video signals, the edited compressed data video signal including packets of data having an edit header indicating that editing has occurred and indicating the position within that packet of a frame boundary marking the transition between frames of the first or second video signal forming part of the edited compressed signal and data of the first or second video signal not forming part of the edited compressed data video signal, comprising:
edit header extracting means (140) for extracting the edit header from the video signal;
decoding means (142,143) for decoding the compressed data video signal and outputting the decoded video signal, in accordance with the extracted header; and
data start/end area detector (161), which controls the decoding means such that for each packet for which the edit header indicates that editing has occurred, decoding of data is inhibited in that portion of the packet corresponding to the data of the first or second video signal not forming part of the edited compressed data video signal on the basis of the frame boundary indicated in the edit header.

6. The decoding apparatus as claimed in claim 5, wherein the first and second compressed video signals include frames having a fixed word length and the edit header includes a frame for indicating an invalid data position of the second compressed video signal.

7. The decoding apparatus as claimed in claim 6, wherein the inhibiting means (161) uses an address corresponding to a frame to indicate the invalid data portion.

## Patentansprüche

1. Einrichtung zum Schneiden komprimierter Daten, umfassend:
eine erste Speichervorrichtung (103) zum Speichern eines ersten Videosignals, das komprimierte Videodaten enthält;
eine zweite Speichervorrichtung (105) zum Speichern eines zweiten Videosignals, das komprimierte Videodaten enthält;
eine Auslesesteuervorrichtung (128, 129), die ein geschnittenes Kompressionsdaten-Videosignal aus dem ersten und dem zweiten Videosignal erzeugt, indem sie jeweils das erste und das zweite Videosignal aus der ersten und der zweiten Speichervorrichtung (103, 105) ausliest und die Zeitbasen des ersten und zweiten Videosignals so einstellt, daß sie miteinander übereinstimmen; und
eine Headerzufügevorrichtung (132, 133, 134, 135, 151, 154, 157), die einen Schnittheader zu den Daten hinzufügt, die das geschnittene Kompressionsdaten-Videosignal bilden, um bildübergreifend codierte Daten anzuzeigen, die nach einem Schnittpunkt auftreten, der den Übergang zwischen aus der ersten Speichervorrichtung ausgelesenen Daten und aus der zweiten Speichervorrichtung ausgelesenen Daten markiert.

2. Decodiereinrichtung zum Decodieren eines geschnittenen Kompressionsdaten-Videosignals, das aus einer Folge von Daten aus einem ersten und einem zweiten Kompressionsdaten-Videosignal gebildet ist, wobei das geschnittene Kompressionsdaten-Videosignal Schnittheader enthält, die die bildübergreifend codierten Daten anzeigen, die hinter einem Schnittpunkt folgen, der den Übergang zwischen Daten aus dem ersten Kompressionsdaten-Videosignal und Daten aus dem zweiten Kompressionsdaten-Videosignal markiert, und die Decodiereinrichtung umfaßt:
eine Schnittheader-Entnahmevorrichtung (140), die einen Schnittheader aus dem Kompressionsdaten-Videosignal entnimmt;
eine Decodiervorrichtung (142, 143, 144), die das Kompressionsdaten-Videosignal gemäß dem entnommenen Header decodiert und das decodierte Videosignal ausgibt; und
eine Ersatzbild-Ersetzungsvorrichtung (150), die ein Ersatzbild abhängig von einem Signal aus der Schnittheader-Entnahmevorrichtung (140) ausgibt, so daß anstelle der nach einem Schnittpunkt empfangenen bildübergreifend codierten Daten ein Ersatzbild ausgegeben wird, und zwar vor dem Empfang von bildintern codierten Daten.

3. Decodiereinrichtung nach Anspruch 2, zudem umfassend eine Vorrichtung, die bestimmt, ob das empfangene geschnittene Kompressionsdaten-Videosignal bildübergreifend oder bildintern codiert ist.

4. Einrichtung zum Schneiden komprimierter Daten, umfassend:
eine erste Speichervorrichtung (103) zum Speichern von Paketen mit fester Wortlänge, die aus komprimierten Videodatenframes eines ersten Videosignals gebildet sind;
eine zweite Speichervorrichtung (105) zum Speichern von Paketen mit fester Wortlänge, die aus komprimierten Videodatenframes eines zweiten Videosignals gebildet sind;
eine Auslesesteuervorrichtung (128, 129), die ein geschnittenes Kompressionsdaten-Videosignal aus dem ersten und dem zweiten Videosignal erzeugt, indem sie jeweils Pakete des ersten und des zweiten Videosignals aus der ersten und der zweiten Speichervorrichtung (103, 105) ausliest und die Zeitbasen des ersten und zweiten Videosignals so einstellt, daß sie miteinander übereinstimmen; und
eine Headerzufügevorrichtung (132, 133, 134, 135, 151, 154, 157), die einen Schnittheader zu den Datenpaketen hinzufügt, die das geschnittene Kompressionsdaten-Videosignal bilden, und zwar an einem Übergangspunkt zwischen Paketen des ersten Videosignals und des zweiten Videosignals, wobei der Schnittheader anzeigt, daß ein Schnitt aufgetreten ist und die Position innerhalb desjenigen Pakets einer Framebegrenzung angibt, das den Übergang zwischen Frames des ersten oder zweiten Videosignals markiert, die einen Teil des geschnittenen Kompressionssignals bilden, und Daten des ersten oder zweiten Videosignals, die keinen Teil des geschnittenen Kompressionsdaten-Videosignals bilden.

5. Decodiereinrichtung zum Decodieren eines geschnittenen Kompressionsdaten-Videosignals, das aus einer Folge von Paketen mit fester Wortlänge besteht, die aus komprimierten Videodatenframes aus ersten und zweiten Kompressionsdaten-Videosignalen gebildet sind, wobei das geschnittene Kompressionsdaten-Videosignal Datenpakete enthält, die einen Schnittheader aufweisen, der anzeigt, daß ein Schnitt aufgetreten ist und die Position innerhalb desjenigen Pakets einer Framebegrenzung angibt, das den Übergang zwischen Frames des ersten oder zweiten Videosignals markiert, die einen Teil des geschnittenen Kompressionssignals bilden, und Daten des ersten oder zweiten Videosignals, die keinen Teil des geschnittenen Kompressionsdaten-Videosignals bilden, umfassend:
eine Schnittheader-Entnahmevorrichtung (140), die den Schnittheader aus dem Videosignal entnimmt;
eine Decodiervorrichtung (142, 143), die das Kompressionsdaten-Videosignal gemäß dem entnommenen Header decodiert und das decodierte Videosignal ausgibt; und
einen Daten-Start/Ende-Bereichserkenner (161), der die Decodiervorrichtung steuert, so daß für jedes Paket, für das der Schnittheader anzeigt, daß ein Schnitt aufgetreten ist, das Decodieren der Daten in demjenigen Abschnitt des Pakets verhindert wird, der den Daten des ersten oder zweiten Videosignals entspricht, die keinen Teil des geschnittenen Kompressionsdaten-Videosignals bilden, und zwar ausgehend von der Framebegrenzung, die im Schnittheader angegeben ist.

6. Decodiereinrichtung nach Anspruch 5, wobei das erste und das zweite komprimierte Videosignal Frames enthalten, die eine feste Wortlänge aufweisen, und der Schnittheader einen Frame enthält, der eine ungültige Datenposition des zweiten komprimierten Videosignals anzeigt.

7. Decodiereinrichtung nach Anspruch 6, wobei die Verhinderungsvorrichtung (161) eine Adresse verwendet, die einem Frame entspricht, um den ungültigen Datenanteil anzuzeigen.

## Revendications

1. Un appareil de montage de données comprimées comprenant :
de premiers moyens de stockage (103) pour stocker un premier signal vidéo incluant des données vidéo comprimées ;
de seconds moyens de stockage (105) pour stocker un second signal vidéo incluant des données vidéo comprimées ;
des moyens de commande de lecture (128, 129) pour former un signal vidéo à données comprimées montées à partir des premier et second signaux vidéo par lecture des premier et second signaux vidéo à partir des premier et second moyens de stockage (103, 105), respectivement, et pour régler les bases de temps des premiers et second signaux vidéo afin d'être en accord mutuel ; et
des moyens d'addition d'en-tête (132, 133, 134, 135, 151, 154, 157) pour ajouter une en-tête de montage à des données formant le signal vidéo à données comprimées montées, afin d'indiquer des données à codage inter-trame se produisant à la suite d'un point de montage marquant la transition entre des données lues à partir des premiers moyens de stockage et des données lues à partir des seconds moyens de stockage.

2. Un appareil de décodage permettant de décoder un signal vidéo à données comprimées montées formé à partir d'une séquence de données de premier et de second signaux vidéo à données comprimées, le signal vidéo à données comprimées montées comprenant des en-têtes de montage indiquant des données à codage inter-trame se produisant à la suite d'un point de montage marquant la transition entre des données du premier signal vidéo à données comprimées et des données du second signal vidéo à données comprimées, l'appareil de décodage comprenant :
des moyens d'extraction d'en-tête de montage (140) pour extraire une en-tête de montage à partir du signal vidéo à données comprimées ;
des moyens de décodage (142, 143, 144) pour décoder le signal vidéo à données comprimées et délivrer le signal vidéo décodé, en accord avec l'en-tête extraite ; et
des moyens de remplacement d'image de substitution (150), pour délivrer une image de substitution en réponse à un signal provenant des moyens d'extraction d'en-tête de montage (140), de sorte qu'une image de substitution est délivrée à la place des données à codage inter-trame reçues après un point de montage antérieur à la réception de données à codage intra-trame.

3. L'appareil de décodage tel que revendiqué à la revendication 2, comprenant en outre des moyens pour déterminer si le signal vidéo à données comprimées montées reçu est à codage inter-trame ou à codage intra-trame.

4. Un appareil de montage de données comprimées comprenant :
de premiers moyens de stockage (103) pour stocker des paquets de longueur de mots fixe formés à partir de trames de données vidéo comprimées d'un premier signal vidéo ;
de seconds moyens de stockage (105) pour stocker des paquets de longueur de mots fixe formés à partir de trames de données vidéo comprimées d'un second signal vidéo ;
des moyens de commande de lecture (128, 129) pour former un signal vidéo à données comprimées monté à partir des premier et second signaux vidéo par lecture de paquets des premier et second signaux vidéo à partir des premier et second moyens de stockage (103, 105), respectivement, et régler les bases de temps des premier et second signaux vidéo pour être en accord mutuel ; et
des moyens d'addition d'en-tête (132, 133, 134, 135, 151, 154, 157) pour ajouter une en-tête de montage à des paquets de données formant le signal vidéo à données comprimées montées au niveau d'un point de transition entre des paquets du premier signal vidéo et du second signal vidéo, l'en-tête de montage indiquant que le montage s'est produit et indiquant la position, à l'intérieur de ce paquet, d'une limite de trame marquant la transition entre des trames du premier ou du second signal vidéo faisant partie du signal comprimé monté et des données du premier ou du second signal vidéo ne faisant pas partie du signal vidéo à données comprimées montées.

5. Un appareil de décodage pour décoder un signal vidéo à données comprimées montées comprenant une séquence de paquets de longueur de mots fixe formés à partir de trames de données vidéo comprimées de premier et second signaux vidéo à données comprimées, le signal vidéo à données comprimées montées incluant des paquets de données présentant une en-tête de montage indiquant que le montage s'est produit et indiquant la position, à l'intérieur de ce paquet, d'une limite de trame marquant la transition entre des trames du premier ou du second signal vidéo faisant partir du signal comprimé monté et des données du premier ou du second signal vidéo ne faisant pas partie du signal vidéo à données comprimées montées, comprenant :
des moyens d'extraction d'en-tête de montage (140) pour extraire, du signal vidéo, l'en-tête de montage ;
des moyens de décodage (142, 143) pour décoder le signal vidéo à données comprimées et délivrer le signal vidéo décodé, en accord avec l'en-tête extraite ; et
un détecteur de zones de début/fin de données (161), lequel commande les moyens de décodage de telle manière que, pour chaque paquet pour lequel l'en-tête de montage indique que le montage s'est produit, le décodage des données est empêché dans cette partie du paquet qui correspond aux données du premier ou du second signal vidéo ne faisant pas partie du signal vidéo à données comprimées montées sur la base de la limite de trame indiquée dans l'en-tête de montage.

6. L'appareil de décodage tel que revendiqué à la revendication 5, dans lequel les premier et second signaux vidéo comprimés comprennent des trames présentant une longueur de mots fixe et où l'en-tête de montage comprend une trame pour indiquer une position de donnée non valable du second signal vidéo comprimé.

7. L'appareil de décodage tel que revendiqué à la revendication 6, dans lequel les moyens d'empêchement (161) utilisent une adresse correspondant à une trame pour indiquer la partie de donnée non valable.
